(19) Europäisches Patentamt
European Patent Office
Office européen des brevets

(11) EP 4 708 433 A1

(12) EUROPEAN PATENT APPLICATION
published in accordance with Art. 153(4) EPC

(43) Date of publication:
11.03.2026 Bulletin 2026/11

(21) Application number: 25755180.4

(22) Date of filing: 14.02.2025

(51) International Patent Classification (IPC):
H01M 10/056 (2010.01)    H01M 10/052 (2010.01)
H01M 50/446 (2021.01)    H01M 50/489 (2021.01)

(52) Cooperative Patent Classification (CPC):
H01M 10/052; H01M 10/056; H01M 50/446;
H01M 50/489; Y02E 60/10

(86) International application number:
PCT/KR2025/099362

(87) International publication number:
WO 2025/174183 (21.08.2025 Gazette 2025/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.02.2024 KR 20240021572

(71) Applicant: LG Energy Solution, Ltd.
Seoul 07335 (KR)

(72) Inventors:
• KIM, Donghyeon
Daejeon 34122 (KR)
• CHO, Kuk Young
Gwacheon-si, Gyeonggi-do 13836 (KR)
• HAH, Hoejin
Daejeon 34122 (KR)
• KIM, Minjae
Ansan-si, Gyeonggi-do 15588 (KR)
• SEO, Junhyeok
Ansan-si, Gyeonggi-do 15588 (KR)

(74) Representative: Goddar, Heinz J.
Boehmert & Boehmert
Anwaltspartnerschaft mbB
Pettenkoferstrasse 22
80336 München (DE)

(54) COMPOSITE SOLID ELECTROLYTE MEMBRANE, MANUFACTURING METHOD THEREFOR, AND ALL-SOLID-STATE BATTERY COMPRISING SAME

(57) The present invention relates to a composite solid electrolyte membrane, a method of preparing same, and an all-solid-state battery comprising same. The composite solid electrolyte membrane comprising: a solid electrolyte membrane comprising a solid electrolyte and a binder; and an ionic liquid, wherein the solid electrolyte membrane comprises a plurality of pores, the ionic liquid is impregnated in the plurality of pores, and the anion of the ionic liquid is $(CF_3SO_2)_2N^-$.

[FIG. 7]

EP 4 708 433 A1

**Description**

[Technical Field]

This application claims the benefit of priority to Korean Patent Application No. 10-2024-0021572, filed February 15, 2024, the disclosures of which are incorporated herein by reference in their entirety.

The present invention relates to a composite solid electrolyte membrane, a method of preparing same, and an all-solid-state battery comprising the same.

[Related Art]

A variety of batteries are being researched to overcome limitations of current lithium secondary batteries in terms of capacity, safety, output, large-scale applications, and microminiaturization.

Representative examples include metal-air batteries, which have a very high theoretical capacity compared to lithium secondary batteries; all-solid-state batteries, which have no risk of explosion and are safe; supercapacitors in terms of output; NaS batteries or redox flow batteries (RFB) for large-scale applications; and thin film batteries for microminiaturization. Continuous research is being conducted in academia and industry on these technologies.

An all-solid-state battery is a battery in which a liquid electrolyte used in a conventional lithium secondary battery is replaced with a solid electrolyte. Since no flammable solvent is used in the battery, there is no possibility of ignition or explosion due to a decomposition reaction of the conventional electrolyte, which greatly improves safety. It also has the advantage of being able to use lithium (Li) metal or lithium alloys as negative electrode materials, which can dramatically improve the energy density relative to the mass and volume of the battery.

Fabrication of a solid electrolyte membrane is essential to improving the energy density of all-solid-state batteries. Traditionally, pellet-type solid electrolyte layers have been prepared by controlling pressure and temperature of solid electrolyte powders. These pellet-type solid electrolyte layers have low toughness, making them easy to break, and are hundreds of $\mu$m or more in thickness, resulting in low energy density, difficulty in scaling up to large areas, and challenges in controlling porosity.

Accordingly, processes such as slurry application, dry processing, and free-standing film fabrication have been investigated. These processes can produce thin solid electrolyte membranes, which provides significant advantages in terms of energy density. However, the solid electrolyte membranes prepared by these processes have a large number of pores, and the pores inevitably cause a reduction in the lithium ion migration pathway. In order to solve the above problem, the process of pressurizing the solid electrolyte membrane was additionally carried out, but it was difficult to completely control the pores, and excessive pressurization caused the binder to migrate within the solid electrolyte membrane, reducing the ionic conductivity. In addition, the ionic conductivity decreases as the solid electrolyte membrane becomes thinner.

Therefore, it is necessary to control the pores of a solid electrolyte membrane and to study a solid electrolyte membrane with excellent ionic conductivity, even when the solid electrolyte membrane is thin.

[Prior art]

[Patent Reference]

Korean Patent No. 10-2280683

[Detailed Description of the Invention]

[Technical Problem]

In order to solve the above problems, the inventors of the present invention conducted a various studies, and found that by preparing a film-like solid electrolyte membrane comprising a solid electrolyte and a binder, and then impregnating the pores of the solid electrolyte membrane with an ionic liquid having $(CF_3SO_2)_2N^-$ anions, high ionic conductivity can be obtained even if the composite solid electrolyte membrane is thin.

Accordingly, it is an object of the present invention to provide a composite solid electrolyte membrane with excellent ionic conductivity.

It is also an object of the present invention to provide an all-solid-state battery comprising the composite solid electrolyte membrane.

[Technical Solution]

To accomplish the above objectives, the present invention relates to a composite solid electrolyte membrane comprising a solid electrolyte membrane comprising a solid electrolyte and a binder; and an ionic liquid,

wherein the solid electrolyte membrane comprises a plurality of pores,
wherein the ionic liquid is impregnated in the plurality of pores,
wherein an anion of the ionic liquid is $(CF_3SO_2)_2N^-$.

Also, the present invention provides a method for preparing a composite solid electrolyte membrane, comprising (1) preparing a solid electrolyte membrane comprising a plurality of pores with a mixture comprising a solid electrolyte and a binder; and (2) impregnating the solid electrolyte membrane comprising the plurality of pores with an ionic liquid, wherein an anion of the ionic liquid is $(CF_3SO_2)_2N^-$.

Further, the present invention provides an all-solid-state battery comprising a positive electrode, a negative electrode, and a solid electrolyte membrane interposed therebetween, wherein the solid electrolyte membrane is the composite solid electrolyte membrane of the present invention.

[Advantageous Effects]

The composite solid electrolyte membrane of the present invention can improve the ionic conductive area, which is degraded by impregnating the pores of the solid electrolyte membrane with an ionic liquid in which the anion is $(CF_3SO_2)_2N^-$, having a good ionic conductivity.

[Brief Description of Drawings]

FIG. 1 is a photograph of the impregnation of a solid electrolyte membrane with an ionic liquid (PMIM TFSI).
FIG. 2 is a photograph of the impregnation of a solid electrolyte membrane with an ionic liquid (EMIM TFSI).
FIG. 3 is an SEM image of the solid electrolyte membrane of Comparative Example 1.
FIG. 4 shows a photograph of the impregnation of a solid electrolyte membrane with an ionic liquid (EMIM $BF_4$).
FIG. 5 is a photograph of the impregnation of a solid electrolyte membrane with an ionic liquid (EMIM DCA).
FIG. 6 shows a photograph of the evaluation of the side reactions between the solid electrolyte membrane and the ionic liquid depending on the type of anion therein.
FIG. 7 is a graph of the ionic conductivity of the composite solid electrolyte membrane of Examples 1 and 2 and the solid electrolyte membrane of Comparative Example 1.

[Best Mode]

Hereinafter, the present invention will be described in more detail.

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.

The terminology used in the present invention is used to describe certain examples only and is not intended to limit the invention. Expressions in the singular include the plural unless the context clearly indicates otherwise. In the present invention, the terms "comprise" or "have" are intended to designate the presence of the features, numbers, steps, actions, components, parts, or combinations thereof described in the specification, and are not to be understood as precluding the possibility of the presence or addition of one or more other features, numbers, steps, actions, components, parts, or combinations thereof.

**Composite solid electrolyte membrane**

The present invention relates to a composite solid electrolyte membrane comprising:

a solid electrolyte membrane comprising a solid electrolyte and a binder; and
an ionic liquid,
wherein the solid electrolyte membrane comprises a plurality of pores,
wherein the ionic liquid is impregnated in the plurality of pores,

wherein an anion of the ionic liquid is $(CF_3SO_2)_2N^-$.

The solid electrolyte membrane may be prepared from a mixture comprising a solid electrolyte and a binder, and may be in the form of a film.

The solid electrolyte may comprise a sulfide-based solid electrolyte.

The sulfide-based solid electrolyte contains sulfur (S) and exhibits ionic conductivity of a metal belonging to Group 1 or 2 of the periodic table, and it may include a Li-P-S-based glass or a Li-P-S-based glass-ceramic.

Specifically, the sulfide-based solid electrolyte may include at least one selected from the group consisting of $Li_aPS_bX$ (wherein $0<a\leq6$, $0<b\leq5$, and X is Cl, Br or I), $Li_6PS_5Br$, $Li_6PS_5I$, $Li_2S-P_2S_5$, $Li_2S-LiI-P_2S_5$, $Li_2S-LiI-Li_2O-P_2S_5$, $Li_2S-LiBr-P_2S_5$, $Li_2S-Li_2O-P_2S_5$, $Li_2S-Li_3PO_4-P_2S_5$, $Li_2S-P_2S_5-P_2S_5$, $Li_2S-P_2S_5-SiS_2$, $Li_2S-P_2S_5-SnS$, $Li_2S-P_2S_5-Al_2S_3$, $Li_2S-GeS_2$ and $Li_2S-GeS_2-ZnS$, and preferably may be $Li_aPS_bX$ (wherein $0<a\leq6$, $0<b\leq5$, and X is Cl, Br or I). The $Li_aPS_bX$ (wherein $0<a\leq6$, $0<b\leq5$, and X is Cl, Br or I) may be an argyrodite-type solid electrolyte. More preferably, it may further comprise at least one selected from the group consisting of $Li_6PS_5Cl$, $Li_6PS_5Br$ and $Li_6PS_5I$. Furthermore, the sulfide-based solid electrolyte may be doped with trace elements, for example, $Li_6PS_5Cl$ additionally doped with bromine (Br).

The binder is not particularly limited as long as it is commonly used in the art.

For example, it can include one or two selected from the group consisting of nitrile butadiene rubber (NBR), acrylonitrile butadiene rubber (ABR), styrene butadiene rubber (SBR), butadiene rubber (BR), styrene-butadiene-styrene copolymer (SBS), polybutadiene (PAN), styrene-ethylene/butylene-styrene block copolymer (SEBS), silicone rubber (SR), hydrogenated nitrile butadiene rubber (HNBR), poly(ethylene vinyl acetate) (PEVA), poly(methyl methacrylate) (PMMA), polyisobutene (PIB), and polyacrylate, or a copolymer thereof, but is not limited thereto, and nitrile butadiene rubber may be preferably used in the present invention.

Also, a composite of a lithium salt and a polymeric resin, that is, a polymer formed by the addition of a polymeric resin to a solvated lithium salt, can be used as a binder, and may exhibit an ionic conductivity of about $1\times10^{-7}$ S/cm or more, preferably about $1\times10^{-5}$ S/cm or more.

Non-limiting examples of the polymeric resin include polyether-based polymers, polycarbonate-based polymers, acrylate-based polymers, polysiloxane-based polymers, phosphazene-based polymers, polyethylene derivatives, alkylene oxide derivatives such as polyethylene oxide, phosphate ester polymers, poly agitation lysines, polyester sulfides, polyvinyl alcohols, polyvinylidene fluorides, and polymers comprising ionic dissociating groups, and may include one or more thereof. Furthermore, examples may include a branched copolymer, a comb-like polymer, and a cross-linked polymeric resin copolymerized with an amorphous polymer such as PMMA, polycarbonate, polysiloxane (PDMS), and/or phosphazene as a comonomer in a poly ethylene oxide (PEO) main chain, and may include one or more thereof.

The lithium salt is an ionizable lithium salt and can be expressed as $Li^+X^-$. The anions of the lithium salt are not specifically limited, but may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

The solid electrolyte and binder may be mixed in a weight ratio of 95:5 to 99.5:0.5. By mixing them in the above weight ratio, a solid electrolyte membrane for all-solid-state batteries can be prepared that can be maintained in the form of a film while minimizing the content of binder that acts as a resistance to ionic conductivity.

In one example of the present invention, the film-like solid electrolyte membrane may be prepared from a mixture comprising a solid electrolyte and a binder. In another example, it may be prepared by preparing a slurry comprising a solid electrolyte and a binder, followed by application and drying thereof.

The solvent used for the slurry is not particularly limited as long as it can disperse a solid electrolyte and a binder, for example, xylene, hexane, benzene, anisole, isobutyl isobutyrate, toluene, or butyl butyrate.

The film-like solid electrolyte membrane may form a plurality of pores as the mixture is pressurized or as the solvent in the slurry evaporates. The plurality of pores reduces the migration path of lithium ions, thereby reducing the ionic conductivity of the solid electrolyte membrane. The present invention attempts to solve this problem by impregnating a plurality of pores formed in a solid electrolyte membrane with an ionic liquid. When the ionic liquid is impregnated into a plurality of pores formed in the solid electrolyte membrane, it can provide an additional migration pathway for lithium ions without obstructing the migration pathway of lithium ions. Thus, the present invention can provide a composite solid electrolyte membrane with excellent ionic conductivity.

Thus, the composite solid electrolyte membrane of the present invention may comprise an ionic liquid, wherein the ionic liquid is impregnated in a plurality of pores of the solid electrolyte membrane. Further, an anion of the ionic liquid may be $(CF_3SO_2)_2N^-$ (bis(trifluoromethanesulfonyl)imide, or "TFSI-"). If the anion of the ionic liquid is $(CF_3SO_2)_2N^-$, it will not cause side reaction with the solid electrolyte membrane, and the affinity of the solid electrolyte membrane and the ionic liquid is excellent, so that the plurality of pores formed in the solid electrolyte membrane can be impregnated with the ionic liquid very well, thereby improving the ionic conductivity of the composite solid electrolyte membrane. If the anion of the ionic liquid is not $(CF_3SO_2)_2N^-$, side reactions with the solid electrolyte membrane may occur, and the plurality of pores formed in the solid electrolyte membrane may not be impregnated with the ionic liquid due to the poor affinity between the solid electrolyte membrane and the ionic liquid, resulting in leakage, and the performance of the all-solid-state battery may be degraded accordingly.

A cation of the ionic liquid may be at least one selected from the group consisting of pyrrolidimium, piperidinium, imidazolium, phosphonium, ammonium, and pyridinium.

The total volume of the plurality of pores may be 1 to 50% by volume of the total volume of the solid electrolyte membrane.

To impregnate the plurality of pores formed in the solid electrolyte membrane with an ionic liquid, an amount of ionic liquid equal to the volume of the pores may be included. The ionic liquid may be provided in an amount of 3 to 50 parts by weight per 100 parts by weight of the solid electrolyte, preferably 4 to 30 parts by weight.

Furthermore, the ionic liquid may be impregnated in an amount of 80 to 100% by volume, preferably 95 to 100% by volume, with respect to the pore volume of the solid electrolyte membrane.

The composite solid electrolyte membrane of the present invention is in the form of a film, and the pores of the solid electrolyte membrane comprising a plurality of pores are impregnated with an ionic liquid, wherein the anion of the ionic liquid is $(CF_3SO_2)_2N^-$. As described above, the composite solid electrolyte membrane of the present invention can have a high ionic conductivity because it can provide an additional migration pathway for lithium ions without obstructing the migration pathway of lithium ions.

Further, the thickness of the composite solid electrolyte membrane may be 10 to 200 $\mu$m. Thus, the composite solid electrolyte membrane of the present invention can achieve a high ionic conductivity even at a small thickness.

**Method for manufacturing composite solid electrolyte membrane**

The present invention also relates to a method for preparing the composite solid electrolyte membrane of the present invention described above, comprising:

(1) preparing a solid electrolyte membrane comprising a plurality of pores with a mixture comprising a solid electrolyte and a binder; and
(2) impregnating the solid electrolyte membrane comprising the plurality of pores with an ionic liquid, wherein the anion of the ionic liquid may be $(CF_3SO_2)_2N^-$.

Step (1) may be the step of preparing a solid electrolyte membrane comprising a plurality of pores with a mixture comprising a solid electrolyte and a binder.

The solid electrolyte membrane may be prepared by pressurizing a mixture comprising a solid electrolyte and a binder, or by preparing a slurry comprising the solid electrolyte and a binder, followed by application and drying thereof.

A plurality of pores may be formed in the solid electrolyte membrane in a process of pressurizing the mixture comprising a solid electrolyte and a binder, or in a process of drying the slurry.

Step (2) may be the step of impregnating the solid electrolyte membrane comprising the plurality of pores prepared in step (1) with an ionic liquid, wherein the ionic liquid is impregnated in the plurality of pores formed in the solid electrolyte membrane.

Further, the anion of the ionic liquid is $(CF_3SO_2)_2N^-$, and the ionic liquid, the content of the ionic liquid, the pore volume of the solid electrolyte membrane, and the degree to which the ionic liquid is impregnated in the pores are as described above.

If a mixture comprising a solid electrolyte, a binder, and an ionic liquid is prepared and then a composite solid electrolyte membrane is prepared from the mixture, phase separation of the binder and the ionic liquid may occur as the mixture dries, resulting in a composite solid electrolyte membrane with a highly uneven surface. Furthermore, as the solvent in the mixture evaporates, pores can form in the composite solid electrolyte membrane. The ionic liquid contained in the mixture may be impregnated in some of the pores of the solid electrolyte membrane; however, unlike the composite solid electrolyte membrane of the present invention, it cannot be impregnated at 80 to 100% by volume relative to the pore volume of the solid electrolyte membrane. That is, when a composite solid electrolyte membrane is prepared from a mixture comprising a solid electrolyte, a binder, and an ionic liquid, pores are formed again in the composite solid electrolyte membrane during the drying process, and it is difficult for all of the ionic liquid present in the mixture to be impregnated of the reformed pores, and as a result, a composite solid electrolyte membrane with a plurality of pores may be prepared. The formation of pores in the composite solid electrolyte membrane reduces the migration pathway of lithium ions, which can result in very low ionic conductivity.

On the other hand, a composite solid electrolyte membrane impregnated with an ionic liquid at 80 to 100% by volume with respect to the pore volume of the solid electrolyte membrane can be prepared by impregnating the pores formed in the solid electrolyte membrane with an ionic liquid after the solid electrolyte membrane is prepared. Thus, the composite solid electrolyte membrane of the present invention can have a very good ionic conductivity.

**All-solid-state battery**

The present invention also relates to an all-solid-state battery comprising a positive electrode, a negative electrode, and a solid electrolyte membrane interposed therebetween, wherein the solid electrolyte membrane may be the composite solid electrolyte membrane of the present invention described above.

The all-solid-state battery is a lithium secondary battery, wherein the positive electrode or the negative electrode is not limited, and it may be a lithium-air battery, a lithium-oxide battery, a lithium-sulfur battery, or a lithium metal battery.

The positive electrode may comprise a positive electrode current collector and a positive electrode active material layer applied to one side or both sides of the positive electrode current collector.

The positive electrode current collector is provided for the support of the positive electrode active material layer and is not particularly limited as long as it has good conductivity and is electrochemically stable in the voltage range of the lithium secondary battery. For example, the positive electrode current collector may be any metal selected from the group consisting of copper, aluminum, stainless steel, titanium, silver, palladium, nickel, alloys thereof, and combinations thereof, wherein the stainless steel may be surface treated with carbon, nickel, titanium, or silver, and the alloy may preferably be an aluminum-cadmium alloy, but may also be a non-conductive polymer whose surface is treated with calcined carbon or a conductive material, or a conductive polymer.

The positive electrode current collector can form microscopic irregularities on its surface to strengthen the binding force with the positive electrode active material, and various forms can be used, such as films, sheets, foils, meshes, nets, porous bodies, foams, non-woven bodies, etc.

The positive electrode active material layer may comprise a positive electrode active material and optionally a conductive material and a binder.

The positive electrode active material may vary depending on the type of all-solid-state battery. For example, the positive electrode active material may include, but not limited to, a layered compound such as lithium cobalt oxide ($LiCoO_2$), or lithium nickel oxide ($LiNiO_2$), or a compound substituted with one or more transition metals; a lithium manganese oxide such as $Li_{1+x}Mn_{2-x}O_4$ (wherein $0 \leq x \leq 0.33$), $LiMnO_3$, $LiMn_2O_3$, or $LiMnO_2$; a lithium copper oxide ($Li_2CuO_2$); a vanadium oxide, such as $LiV_3O_8$, $V_2O_5$, or $Cu_2V_2O_7$; Ni site-type lithium nickel compound represented by $LiNi_{1-x}M_xO_2$ (wherein M is Co, Mn, Al, Cu, Fe, Mg, B or Ga; and $0.01 \leq x \leq 0.3$); a lithium manganese complex oxide represented by $LiMn_{2-x}M_xO_2$ (wherein M is Co, Ni, Fe, Cr, Zn or Ta; and $0.01 \leq x \leq 0.1$) or $Li_2Mn_3MO_8$ (wherein M is Fe, Co, Ni, Cu or Zn); a lithium manganese complex oxide with spinel structure, represented by $LiNi_xMn_{2-x}O_4$; $LiCoPO_4$; $LiFePO_4$; elemental sulfur ($S_8$); a sulfur-based compound such as $Li_2Sn$ (wherein n is 1), an organosulfur compound or a carbon-sulfur polymer (($C_2S_x$)n, wherein x is 2.5 to 50, and n is 2).

The conductive material is a material that electrically connects the electrolyte and the positive electrode active material and serves as a pathway for electrons to move from the current collector to the positive electrode active material, and can be used without restriction as long as it does not cause chemical changes in the lithium secondary battery and has porosity and conductivity.

For example, as the conductive material, porous carbon-based materials wherein carbon-based material including carbon black, graphite, graphene, activated carbon, and carbon fiber; and metallic fibers such as metal mesh; metallic powders such as copper, silver, nickel, or aluminum; or organic conductive materials such as polyphenylene derivatives can be used. The conductive materials may be used alone or in combination.

Currently commercially available products as a conductive material include Acetylene Black (from Chevron Chemical Company or Gulf Oil Company), Ketjen Black EC (from Armak Company), Vulcan XC-72 (from Cabot Company), and Super P (from MMM). Examples may include acetylene black, carbon black, and graphite.

Further, the binder further increases the binding force between the components comprised of the positive electrode, or between the components and the current collector, and any binder known in the art may be used.

For example, the binder may be one or a mixture or copolymer of two or more selected from the group consisting of a fluoroplastic binder comprising polyvinylidenefluoride (PVdF) or polytetrafluoroethylene (PTFE); a rubber-based binder comprising styrene butadiene rubber (SBR), acrylonitrile-butadiene rubber, or styrene-isoprene rubber; a cellulosic binder, including carboxyl methyl cellulose (CMC), starch, hydroxypropyl cellulose, and regenerated cellulose; a polyalcoholic binder; a polyolefin binder, including polyethylene or polypropylene; a polyimide binder; a polyester binder; and a silane binder.

The negative electrode may comprise a negative electrode current collector and a negative electrode active material layer located on the negative electrode current collector. Further, the negative electrode, like the positive electrode, may comprise a conductive material and a binder as desired. The negative electrode current collector, conductive material, and binder are as described above.

The negative electrode active material can be any material that can reversibly intercalate or deintercalate lithium ions ($Li^+$), and any material that can react with lithium ions to reversibly form lithium-containing compounds.

For example, the negative electrode active material may include, but not limited to, one or more carbonaceous materials selected from the group consisting of crystalline artificial graphite, crystalline natural graphite, amorphous hard carbon, low crystalline soft carbon, carbon black, acetylene black, Ketjen black, super-P, graphene, and fibrous carbon, Si-based materials, $Li_xFe_2O_3$ (wherein $0{\leq}x{\leq}1$), $Li_xWO_2$ (wherein $0{\leq}x{\leq}1$), $Sn_xMe_{1-x}Me'_yO_z$ (wherein Me is Mn, Fe, Pb or Ge; Me' is Al, B, P, Si; elements of Group 1, 2 or 3 of the periodic table; halogen; $0{<}x{\leq}1$; $1{\leq}y{\leq}3$; and $1{\leq}z{\leq}8$) and other metal complex oxides; lithium metals; lithium alloys; silicon-based alloys; tin-based alloys; metal oxides such as $SnO$, $SnO_2$, $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, $Bi_2O_5$, etc.; conductive polymers, such as polyacetylene; Li-Co-Ni based materials; titanium oxides; and lithium titanium oxides.

Further, the negative electrode may comprise a negative electrode current collector and a coating layer comprising metal-carbon composite particles positioned on the negative electrode current collector. This may mean an anodeless, which does not contain a negative electrode active material.

The negative electrode may be such that when the all-solid-state battery is charged, lithium ions pass through the coating layer to reach the surface of the negative electrode current collector, and are electrodeposited to form a lithium metal layer.

The metal-carbon composite particles may have a structure in which carbon particles and metal particles are mutually attached or one is coated on the surface of the other, and may be physically or chemically bonded.

The carbon particles may include natural graphite, artificial graphite, hard carbon, soft carbon, carbon black, acetylene black, ketjen black, channel black, furnace black, lamp black, summer black, carbon nanotubes, fullerene, carbon fiber, and carbon fluoride.

The metal particles may be lithiophilic metals, for example, Ni, Cu, Ag, Au, Pt, Al, Zn, and Bi, and may be any one or a combination of two or more thereof. It is advantageous to form a stable and uniform lithium layer on the surface of the current collector by introducing a metal having the lithiophilic properties.

The negative electrode may be prepared by mixing a binder solution and the composite particles to prepare a slurry for forming a coating layer, and then applying and drying the slurry onto a negative electrode current collector. In this case, the binder may be any conventional binder used in the art.

The preparation of the all-solid-state battery is not particularly limited by the present invention, and known methods may be used.

For example, a composite solid electrolyte membrane is placed between the positive electrode and the negative electrode, which is then compression molded to assemble the cell. The assembled cell is installed in the exterior material and sealed by heating compression or the like. Exterior materials include laminated packs of aluminum or stainless steel, and cylindrical or square metallic containers.

In one example, the electrodes of the positive electrode and negative electrode are prepared via a slurry coating process in which the electrodes are prepared in the form of a slurry composition comprising a respective electrode active material, a solvent, and a binder, coated, and then dried.

The method of coating the electrode slurry on the current collector may include a method of distributing the electrode slurry on the current collector and uniformly dispersing it using a doctor blade, die casting, comma coating, or screen printing. Alternatively, the electrode slurry can be molded on a separate substrate and then bonded to the current collector by pressing or lamination methods. The thickness of the final coating can be controlled by adjusting the concentration of the slurry solution or the number of coats.

The drying process is the removal of solvent and moisture from the slurry in order to dry the slurry coated on the metal current collector, which can vary depending on the solvent used. For example, this process is conducted in a vacuum oven at 50 to 200°C. Drying method may include, for example, drying by warm air, hot air or low humidity air, vacuum drying, and irradiation with (far) infrared or electromagnetic radiation. The drying time is not specifically specified, but typically ranges 30 seconds to 24 hours.

After the drying process, the process may further comprise a cooling process, the cooling process may comprise slow cooling to room temperature to ensure that the recrystallized organization of the binder is well formed.

Furthermore, if necessary, to increase the capacity of the electrode after the drying process and to increase the adhesion between the current collector and the active material, a rolling process can be performed, in which the electrode is passed between two heated rolls and compressed to the desired thickness. The rolling process is not particularly limited in the present invention, and known rolling processes can be used. For example, it is performed by passing the electrode between rotating rolls or using a flatbed press.

The shape of the all-solid-state battery is not particularly limited and can be cylindrical, stacked, coin-shaped, or otherwise.

[Mode for Practicing the Invention]

Hereinafter, preferred examples are described for the purpose of illustrating the present invention, but it will be apparent to those skilled in the art that various changes and modifications are possible within the scope of the invention and the technical idea, and that such changes and modifications fall within the scope of the appended patent claims.

### Example 1. Preparation of composite solid electrolyte membrane

Nitrile butadiene rubber was used as a binder, and a binder solution was prepared by mixing the above binder with toluene in a weight ratio of 3:97. Argyrodite ($Li_6PS_5Cl$) was used as a solid electrolyte, and a slurry for preparing solid electrolyte membrane was prepared by mixing the solid electrolyte with the above binder solution. The weight ratio of binder to solid electrolyte was 3:97.

A solid electrolyte membrane comprising a plurality of pores was prepared by applying and drying the slurry for preparing a solid electrolyte membrane on a release film, and the total volume of the formed pores was 30% by volume with respect to the total volume of the solid electrolyte membrane.

As an ionic liquid, 1-methyl-3-propylimidazolium bis(trifluoromethylsulfonyl)imide (PMIM TFSI) was used.

1.2 $\mu$L of an ionic liquid was used to impregnate the pore volume of the solid electrolyte membrane with 100% by volume of the ionic liquid, and the composite solid electrolyte membrane was prepared by impregnating the solid electrolyte membrane with the ionic liquid.

By calculating the weight difference between the solid electrolyte membrane and the composite solid electrolyte membrane, it was found that the ionic liquid was impregnated at 100% by volume with respect to the pore volume of the solid electrolyte membrane.

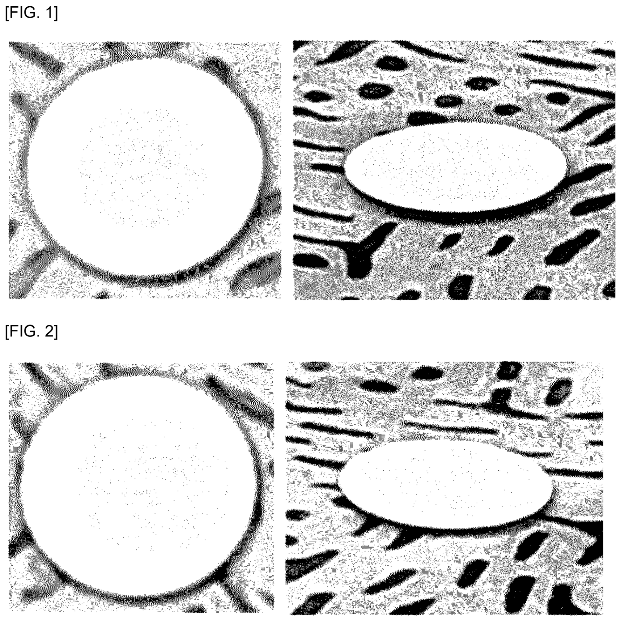

FIG. 1 is a photograph of the impregnation of the solid electrolyte membrane with the ionic liquid. The PMIM TFSI, which is an ionic liquid, has an excellent affinity with the solid electrolyte membrane, resulting in a low contact angle, and it was found that the impregnation of the solid electrolyte membrane with the ionic liquid proceeds smoothly.

### Example 2. Preparation of composite solid electrolyte membrane

The composite solid electrolyte membrane was prepared by performing the same procedure as Example 1 above, except that 1-ethyl-3-methylimidazolium bis(trifluoromethylsulfonyl)imide (EMIM TFSI) was used as an ionic liquid.

By calculating the weight difference between the solid electrolyte membrane and the composite solid electrolyte membrane, it was found that the ionic liquid was impregnated at 100% by volume with respect to the pore volume of the solid electrolyte membrane.

FIG. 2 is a photograph of the impregnation of the solid electrolyte membrane with the ionic liquid. The EMIM TFSI, which is an ionic liquid, has an excellent affinity with the solid electrolyte membrane, resulting in a low contact angle, and it was found that the impregnation of the solid electrolyte membrane with the ionic liquid proceeds smoothly.

### Comparative Example 1. Preparation of solid electrolyte membrane

Nitrile butadiene rubber was used as a binder, and a binder solution was prepared by mixing the above binder with toluene in a weight ratio of 3:97. Argyrodite ($Li_6PS_5Cl$) was used as a solid electrolyte, and a slurry for preparing solid electrolyte membrane was prepared by mixing the solid electrolyte with the above binder solution. The weight ratio of binder to solid electrolyte was 3:97.

A solid electrolyte membrane comprising a plurality of pores was prepared by applying and drying the slurry for preparing a solid electrolyte membrane on a release film, and the total volume of the formed pores was 30% by volume with respect to the total volume of the solid electrolyte membrane.

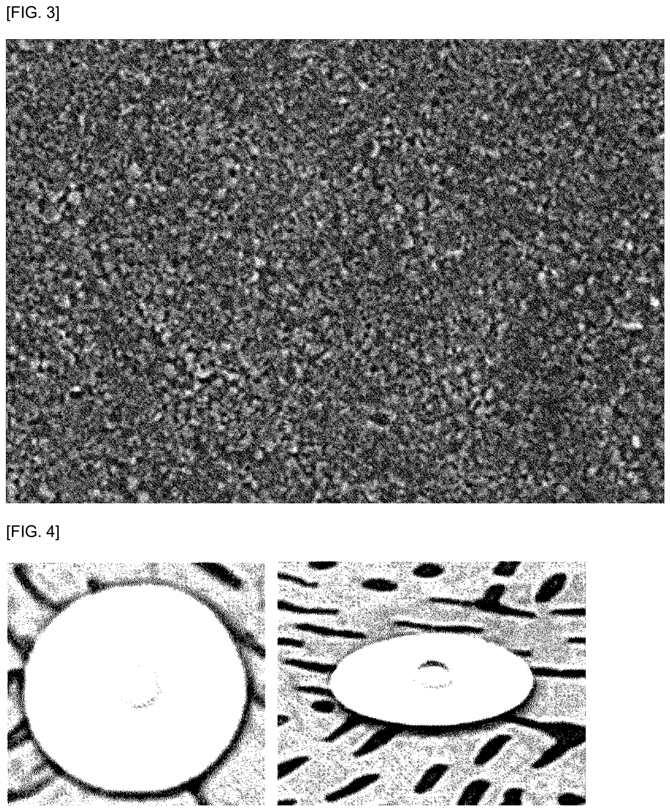

FIG. 3 is an SEM image of the surface of the solid electrolyte membrane having uniform surface and pores.

### Comparative Example 2. Preparation of composite solid electrolyte membrane

The composite solid electrolyte membrane was prepared by performing the same procedure as Example 1 above, except that 1-ethyl-3-methylimidazolium tetrafluoroborate (EMIM $BF_4$) was used as an ionic liquid.

FIG. 4 is a photograph of the impregnation of the solid electrolyte membrane with the ionic liquid, and it was found that the ionic liquid, EMIM $BF_4$, has a poor affinity with the solid electrolyte membrane, resulting in a high contact angle, and it was found that the impregnation of the solid electrolyte membrane with the ionic liquid is not achieved.

### Comparative Example 3. Preparation of composite solid electrolyte membrane

The composite solid electrolyte membrane was prepared by performing the same procedure as Example 1 above, except that 1-ethyl-3-methylimidazolium dicyanamide (EMIM DCA) was used as an ionic liquid.

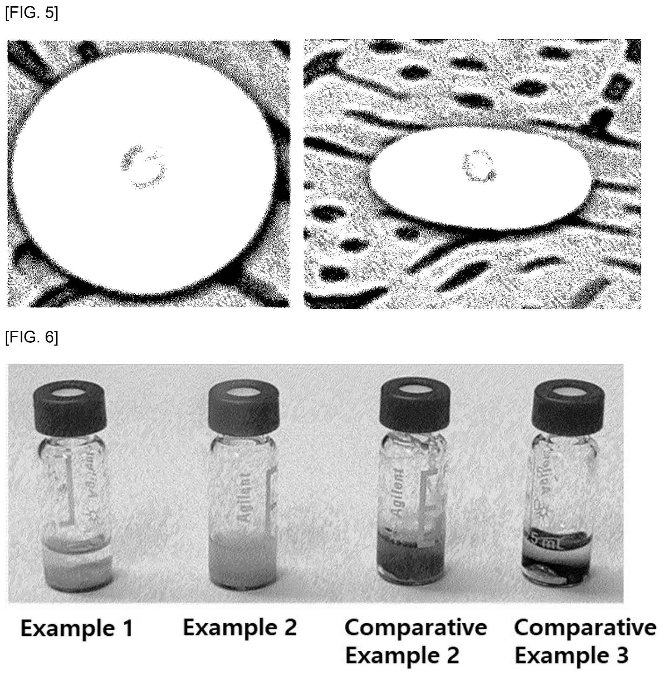

FIG. 5 is a photograph of the impregnation of the solid electrolyte membrane with the ionic liquid, and it was found that the ionic liquid, EMIM DCA, has a poor affinity with the solid electrolyte membrane, resulting in a high contact angle, and it was found that the impregnation of the solid electrolyte membrane with the ionic liquid is not achieved.

Therefore, it was found that if the anion of the ionic liquid is $(CF_3SO_2)_2N^-$, it has a good affinity with the solid electrolyte membrane, and the ionic liquid is impregnated at 100% by volume with respect to the pore volume of the solid electrolyte membrane.

On the other hand, it was found that unless the anion of the ionic liquid is $(CF_3SO_2)_2N^-$, it has poor affinity with the solid electrolyte membrane, and the ionic liquid is not impregnated in the pores formed in the solid electrolyte membrane.

### Experimental Example 1. Evaluation of side reactions between solid electrolyte membrane with ionic liquid

5 mg of solid electrolyte ($Li_6PS_5Cl$) was mixed with the ionic liquids used in Examples 1 and 2 and Comparative Examples 2 and 3, respectively. The condition of the mixture was observed after 24 hours and is shown in FIG. 6.

The ionic liquids in Examples 1 and 2, PMIM TSFI and EMIM TFSI, did not undergo side reactions with the solid electrolyte, resulting in no discoloration. In contrast, the ionic liquids in Comparative Examples 2 and 3, EMIM $BF_4$ and EMIM DCA, were found to undergo side reactions with the solid electrolyte, resulting in discoloration.

Therefore, it was confirmed that if the anion of the ionic liquid is $(CF_3SO_2)_2N^-$, there is no side reaction with the solid electrolyte, and a composite solid electrolyte membrane can be prepared. On the other hand, it was found that if the anion of the ionic liquid is not $(CF_3SO_2)_2N^-$, not only the impregnation of the ionic liquid into the pores formed in the solid electrolyte membrane does not occur, but also the side reaction with the solid electrolyte membrane occurs, preventing the preparation of a composite solid electrolyte membrane.

### Experimental Example 2. Measurement of ionic conductivity

The ionic conductivity of the composite solid electrolyte membranes of Examples 1 and 2 and the solid electrolyte membrane of Comparative Example 1 were measured.

The ionic conductivity was calculated using Formula 1 below after measuring the resistance of the composite solid electrolyte membrane of Examples 1 and 2 and the solid electrolyte membrane of Comparative Example 1.

[Formula 1]

$$\sigma = \frac{L}{RA}$$

($\sigma$=ionic conductivity, L=thickness of the composite solid electrolyte membrane (Examples 1, 2) or solid electrolyte membrane (Comparative Example 1), R=resistivity, A=area of the composite solid electrolyte membrane (Examples 1, 2) or solid electrolyte membrane (Comparative Example 1))

The composite solid electrolyte membrane of Example 1 (area: 78.5 mm$^2$ X thickness: 0.006 cm, with a tolerance of $\pm 5\ \mu$m) was prepared. The film of titanium/composite solid electrolyte membrane of Example 1/titanium was prepared and pressurized, and an alternating voltage was applied to the titanium, and the temperature condition was 25°C. The application condition was set to an amplitude of 5 to 10 mV and a measurement frequency range of 1 Hz to 3 MHz.

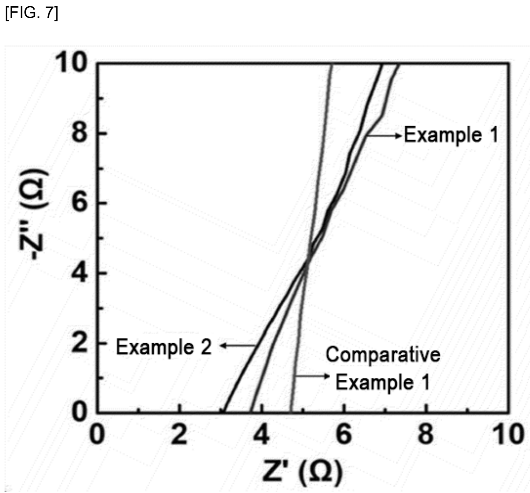

In addition, the ionic conductivity was measured using the composite solid electrolyte membrane of Example 2 and the solid electrolyte membrane of Comparative Example 1, respectively, instead of the composite solid electrolyte membrane of Example 1, and the results are shown in Table 1 and FIG. 7 below.

[Table 1]

|  | Resistance | Ion conductivity |
|---|---|---|
| Example 1 | 3.73 Ω | 2.01 mS/cm |
| Example 2 | 3.09 Ω | 2.23 mS/cm |
| Comparative Example 1 | 4.7 Ω | 1.44 mS/cm |

The composite solid electrolyte membranes of Examples 1 and 2 showed lower resistance and higher ionic conductivity than the solid electrolyte membrane of Comparative Example 1. The composite solid electrolyte membranes of Examples 1 and 2 exhibited high ionic conductivity due to the impregnation of the pores formed in the solid electrolyte membranes with ionic liquid, resulting in providing additional migration pathways for the lithium ions without obstructing their pathways. On the other hand, in the solid electrolyte membrane of Comparative Example 1, the pores were not impregnated with the ionic liquid of the present invention, so that the pores obstructed the migration pathway of lithium ions, resulting in a lower ionic conductivity than Examples 1 and 2.

**Claims**

1. A composite solid electrolyte membrane comprising:

   a solid electrolyte membrane comprising a solid electrolyte and a binder; and an ionic liquid,
   wherein the solid electrolyte membrane comprises a plurality of pores,
   wherein the ionic liquid is impregnated in the plurality of pores,
   wherein an anion of the ionic liquid is $(CF_3SO_2)_2N^-$.

2. The composite solid electrolyte membrane according to claim 1,
   wherein a cation of the ionic liquid is at least one selected from the group consisting of pyrrolidinium, piperidinium, imidazolium, phosphonium, ammonium, and pyridinium.

3. The composite solid electrolyte membrane according to claim 1,
   wherein the ionic liquid is comprised in an amount of 3 to 50 parts by weight per 100 parts by weight of the solid electrolyte.

4. The composite solid electrolyte membrane according to claim 1,
   wherein the total volume of the plurality of pores is 1 to 50% by volume of the total volume of the solid electrolyte membrane.

5. The composite solid electrolyte membrane according to claim 4,
   wherein the ionic liquid is impregnated at 80 to 100% by volume with respect to the pore volume of the solid electrolyte membrane.

6. The composite solid electrolyte membrane according to claim 1,
   wherein the solid electrolyte is a sulfide-based solid electrolyte.

7. The composite solid electrolyte membrane according to claim 1,
   wherein the composite solid electrolyte membrane has a thickness of 10 to 200 $\mu$m.

8. A method for preparing a composite solid electrolyte membrane according to claim 1, comprising:

   (1) preparing a solid electrolyte membrane comprising a plurality of pores with a mixture comprising a solid electrolyte and a binder; and
   (2) impregnating the solid electrolyte membrane comprising the plurality of pores with an ionic liquid,

   wherein the anion of the ionic liquid is $(CF_3SO_2)_2N^-$.

9. The method for preparing a composite solid electrolyte membrane according to claim 8,
   wherein the ionic liquid is impregnated in a plurality of pores of the solid electrolyte membrane.

10. An all-solid-state battery comprising a positive electrode, a negative electrode, and a solid electrolyte membrane interposed therebetween,
    wherein the solid electrolyte membrane is the composite solid electrolyte membrane according to claim 1.

[FIG. 1]

[FIG. 2]

[FIG. 3]

[FIG. 4]

[FIG. 5]

[FIG. 6]

Example 1    Example 2    Comparative Example 2    Comparative Example 3

[FIG. 7]

## INTERNATIONAL SEARCH REPORT

| International application No. |
| --- |
| **PCT/KR2025/099362** |

**A.   CLASSIFICATION OF SUBJECT MATTER**

**H01M 10/056**(2010.01)i; **H01M 10/052**(2010.01)i; **H01M 50/446**(2021.01)i; **H01M 50/489**(2021.01)i

According to International Patent Classification (IPC) or to both national classification and IPC

**B.   FIELDS SEARCHED**

Minimum documentation searched (classification system followed by classification symbols)

H01M 10/056(2010.01); H01M 10/052(2010.01); H01M 10/0562(2010.01); H01M 10/0565(2010.01); H01M 10/0585(2010.01); H01M 4/13(2010.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질막 (solid electrolyte membrane), 바인더 (binder), 이온성 액체 (ionic liquid), 기공 (pore), 함침 (impregnation), 1-메틸-3-프로필이미다졸륨 비스(트리플루오로메틸설포닐)이미드 (1-methyl-3-propylimidazolium bis(trifluoromethylsulfonyl)imide, TFSI-, (CF3SO2)2N-), 전고체 전지 (all-solid state battery)

**C.   DOCUMENTS CONSIDERED TO BE RELEVANT**

| Category* | Citation of document, with indication, where appropriate, of the relevant passages | Relevant to claim No. |
| --- | --- | --- |
| X | KR 10-2018-0094184 A (KOREA ELECTRONICS TECHNOLOGY INSTITUTE) 23 August 2018 (2018-08-23)<br>See claims 1-3, 7 and 8; paragraphs [0018]-[0021], [0027], [0033], [0037]-[0040], [0046]-[0050] and [0055]; and figures 1 and 3. | 1-10 |
| A | KR 10-2022-0026768 A (RESEARCH & BUSINESS FOUNDATION SUNGKYUNKWAN UNIVERSITY) 07 March 2022 (2022-03-07)<br>See abstract; and claims 1-10. | 1-10 |
| A | KR 10-2022-0145605 A (INCHEON NATIONAL UNIVERSITY RESEARCH & BUSINESS FOUNDATION) 31 October 2022 (2022-10-31)<br>See abstract; and claims 1-15. | 1-10 |
| A | KR 10-1953738 B1 (KOREA INSTITUTE OF ENERGY RESEARCH) 04 March 2019 (2019-03-04)<br>See abstract; and claims 6 and 10. | 1-10 |

| ✓ Further documents are listed in the continuation of Box C. | ✓ See patent family annex. |
| --- | --- |

| \*    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **23 May 2025** | **26 May 2025** |

| Name and mailing address of the ISA/KR<br><br>**Korean Intellectual Property Office<br>Government Complex-Daejeon Building 4, 189 Cheongsa-ro, Seo-gu, Daejeon 35208** | Authorized officer |
| --- | --- |
| Facsimile No. **+82-42-481-8578** | Telephone No. |

Form PCT/ISA/210 (second sheet) (July 2022)

## INTERNATIONAL SEARCH REPORT

International application No.

**PCT/KR2025/099362**

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0018348 A (SEOUL NATIONAL UNIVERSITY R&DB FOUNDATION) 15 February 2022 (2022-02-15)<br>See abstract; and claims 1-20. | 1-10 |

Form PCT/ISA/210 (second sheet) (July 2022)

**INTERNATIONAL SEARCH REPORT**
**Information on patent family members**

International application No.

**PCT/KR2025/099362**

| Patent document cited in search report | | | Publication date (day/month/year) | Patent family member(s) | | | Publication date (day/month/year) |
|---|---|---|---|---|---|---|---|
| KR | 10-2018-0094184 | A | 23 August 2018 | None | | | |
| KR | 10-2022-0026768 | A | 07 March 2022 | None | | | |
| KR | 10-2022-0145605 | A | 31 October 2022 | KR | 10-2501232 | B1 | 16 February 2023 |
| KR | 10-1953738 | B1 | 04 March 2019 | None | | | |
| KR | 10-2022-0018348 | A | 15 February 2022 | KR | 10-2468658 | B1 | 21 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240021572
- KR 102280683